# EUROPEAN PATENT APPLICATION

(11) **EP 0 618 010 A1**
(43) Date of publication of application: **05.10.1994**
(21) Application number: 94200789.9
(22) Date of filing: 25.03.1994
(51) Int. Cl.: B03B 5/42, B03B 5/30, B03B 9/06

(54) **Method and installation for separating materials**

(30) Priority: 02.04.1993 BE 9300332
(71) Applicant: OLIVIER, Paul, B-8610 Handzame (BE)
(72) Inventor: OLIVIER, Paul, B-8610 Handzame (BE)
(74) Representative: Powis de Tenbossche, Roland

(57) **Abstract**

Method for separating materials, especially waste materials, characterized in that it subsequently provides for a magnetic separation; a separation by means of a sifting device (4); an aerodynamic separation by means of an air separator (34); and a separation by means of a separation process which mainly consists in putting the materials yet to be separated in a medium (60), in moving the medium (60), and in separately removing the floating and sinking components (64, 66) of the above-mentioned material (7) from the medium (60).

## Description

The present invention concerns a method and installation for separating materials.

The invention is meant for separating waste materials, such as ferrous and nonferrous scrap and the like, for example scrap of computers, cars and also smaller waste, and for separating light and heavy shredder waste resulting from the processing of ferrous and nonferrous scrap in what are called shredder installations, also called hammer mills.

Installations for processing scrap, in particular for separating reduced scrap, are already known in various forms. A disadvantage of the known embodiments consists in that the separation is little refined.

Also, the present invention aims a method and installation for separating materials which provide a solution to the above-mentioned disadvantage.

To this end, the invention relates to a method for separating materials, especially waste materials, characterized in that it subsequently provides for a magnetic separation; a separation by means of a sifting device; an aerodynamic separation by means of an air separator; and a separation by means of a separation process which mainly consists in putting the materials yet to be separated in a medium, in moving the medium, and in separately removing the floating and sinking components of the remaining material from the medium.

This precise sequence of steps, with the intervention of other steps or not, allows an optimal separation of scrap with a minimal number of machines.

As further a moving medium is used, it is possible to obtain a very precise separation in a very quick way, and a large series of mediums can be used, in particular with various densities, as a result of which different separation effects can be obtained.

According to the invention, use is preferably made for the medium of a suspension, in other words a mixture of solid and liquid components, preferably sand and/or sandy clay in water, ferrosilicon and/or magnetite in water, depending on the required density.

In order to obtain an optimum separation, it is preferred, according to the invention, to put the materials together with the medium in a receiver, where the materials are separated according to the their required density, whereby the movement in the medium is obtained by continuously supplying and discharging the medium from the receiver, such that there is a permanent flow in here, or by moving, for example turning the receiver, or better still through a combination of the two above-mentioned operations.

The invention also relates to an installation for separating materials to realize the above-mentioned method, characterized in that it consists of subsequently and in the order in which the materials are processed, a magnetic separation device; a sifting device; an aerodynamic separation device; and a separation device which is formed of a receiver, meant to contain a medium, means to move the medium, means to put the materials yet to be separated with the medium in the receiver, means to carry off the components floating on the medium from the receiver, and means to carry off the sinking components in the medium separately from the floating components.

Moreover, the installation can also be equipped with a dose-measuring device at its inlet.

In order to better explain the characteristics according to the invention, the following preferred embodiment is described, as an example only without being limitative in any way, with reference to the accompanying drawings, where:
figure 1 schematically represents an installation according to the invention;
figure 2 shows a view according to arrow F2 in figure 1;
figure 3 shows a view according to arrow F3 in figure 2;
figure 4 shows a view according to arrow F4 in figure 1;
figure 5 shows a view according to line V-V in figure 4;
figure 6 shows a view of the part which is indicated in figure 1 by F6, whereby this figure is partly a true representation and partly a schematic representation;
figure 7 shows a view according to arrow F7 in figure 1;
figure 8 shows a section according to line VIII-VIII in figure 7.

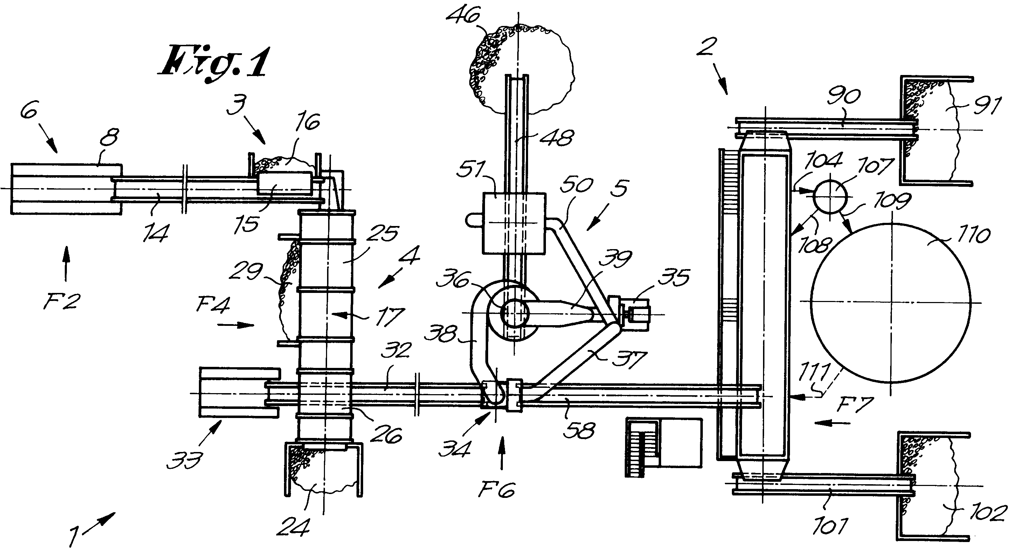

As represented in figure 1, the invention concerns a separation installation 1, which consists of at least one separation device 2 having the characteristics mentioned in the introduction and further explained in the description, and which contains, before the above-mentioned separation device 2, one or more extra separation devices, among others for example a magnetic separation device 3, a sifting device 4 and an aerodynamic separation device 5. Moreover, the installation can also be provided with a dose-measuring device 6.

The different parts are subsequently described hereafter in the order in which the materials 7 to be separated, in other words the scrap to be separate, go through them.

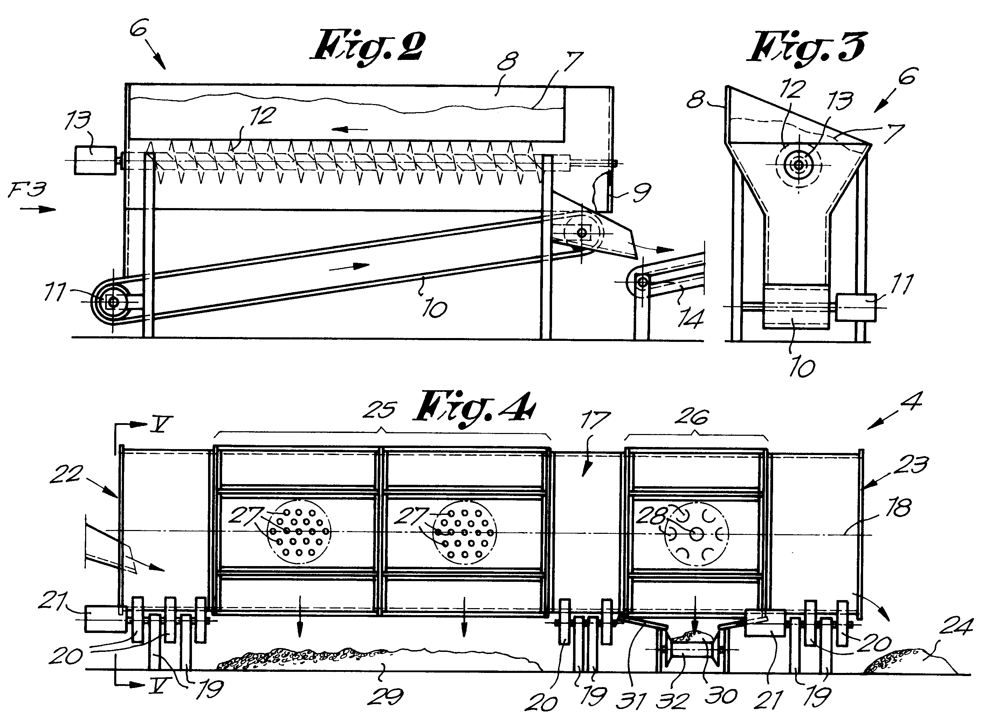

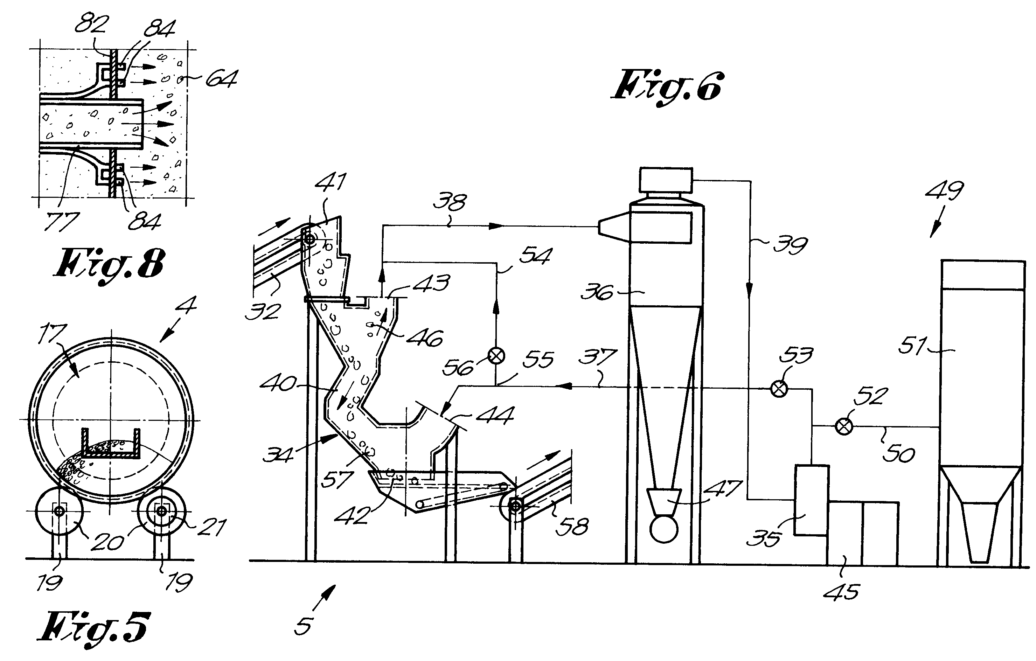

The dose-measuring device 6 has a twofold aim, namely to poise the material 7 and to steadily feed the installation 1, preferably at an adjustable flow rate. As shown in figures 2 and 3, it mainly consists of a funnel-shaped receiver 8, which is provided with a discharge opening 9 of specific dimensions, and a conveyor belt 10 which works in conjunction with the bottom side of the receiver 8 and which makes it possible to remove the materials 7 supplied to the receiver 8 from said receiver 8 via the discharge opening 9.

The receiver 8 preferably consists of a longitudinal funnel-shaped tray in whose bottom is provided a longitudinal opening. The above-mentioned discharge opening 9 is situated in the side wall of the receiver 8 and is connected onto the opening provided in the bottom. The conveyor belt 10, which is preferably a plate conveyor, extends under the longitudinal opening, all this such that the materials 7 are removed via the opening 9 as a result of the rotation of the conveyor belt 10. As the dimensions of the opening 9 are constant, the material 7 is removed at a steady speed, as a function of the speed of the conveyor belt 10.

The conveyor belt 10 is driven by means of a driving element 11, preferably an electrical engine. Preferably, an adjustable driving element 11 is used, so that the speed of the conveyor belt 10, and consequently also of the flow, can be adjusted as desired.

As represented in figure 2, the conveyor belt 10 may form an angle with the bottom side of the receiver 8.

In order to prevent obstructions at the discharge opening 9, as well as to promote a constant flow, a return element, such as a return screw 12, is preferably provided in the receiver 8, which carries back the surplus of materials 7 in the opposite direction of the conveyor belt 10. The return screw 12 can be driven by means of a driving element 13, for example also an electrical engine.

Subsequently, the materials 7 are carried to the above-mentioned magnetic separation device 3, for example by means of a conveyor line 14. The separation device 3 consists of a magnetic drum 15 which is erected along the conveyor line 14, which makes sure that the materials 7 containing ferromagnetic metals are separated. The separated components 16 are collected on the spot or carried off directly.

According to the example shown in figure 1, the other materials 7 are then processed in a sifting device 4.

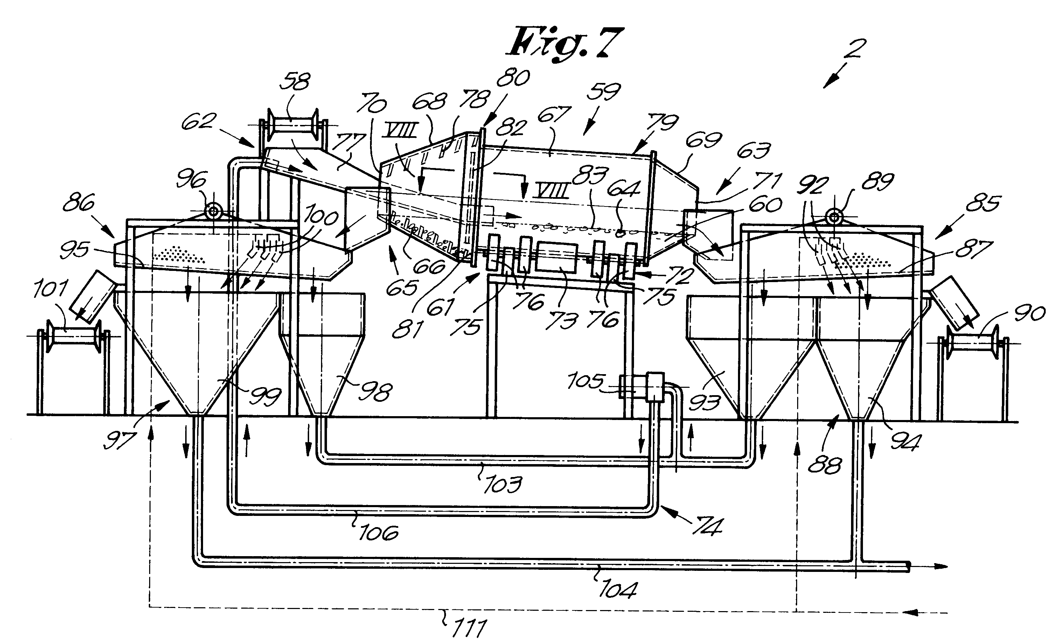

As shown in figures 4 and 5, use is preferably made to this end of a sifting device 4 with a drum screen 17. This drum screen has two aims, to volumetrically divide the material 7 in at least two granular sizes and better still in three granular sizes, and to give the part of the materials which is lead further to the aerodynamic separation device 5 a more uniform shape through the operation of the drum respectively.

As shown in figures 4 and 5, the drum screen 17 is erected horizontally or mainly horizontally and can rotate around its longitudinal axis 18, for example because it rests on a number of supports 19 which are provided with rollers or wheels 20. The drive of the drum screen 17 can hereby be provided for by driving one or several of the above-mentioned wheels 20 by means of one or several driving elements 21 such as electrical engines.

The drum screen 17 is open at its crosscut ends 22 and 23, all this such that the material 7 can be supplied at one end 22, whereas the residual components 24 are removed from the drum screen 17 at the other end 23.

As the drum is provided with suited sieve walls, there is a selective sifting. In the example shown in figure 4, use is made of two sieve walls 25 and 26 with sieve openings 27 and 28 of different dimensions. In the figure, these openings are represented merely partially and to an enlarged scale. It is clear, however, that the walls 25 and 26 can be provided with such openings over their entire perimeter. The openings may have various shapes, for example the shape of a circle or a polygon.

It is also clear that the sieve wall 25 with the smallest sieve openings 27 is situated nearest to the end 22, whereas the sieve wall 26 is situated further from there.

According to the most preferred embodiment, the sieve openings 27 and 28 have such dimensions that the materials 7 provided in the sifting device 4 are divided into three components 29, 30 and 24 with granular sizes in the order of 0-12 mm, 12-120 mm and bigger than 120 mm.

The materials 7, or at least the part which has not been retained by the magnetic separation device 3, are thus moved from the end 22 in the direction of the end 23. The smallest components 29 are collected under the sieve wall 25. The medium-sized components 30 are put on a conveyor line 32 such as a conveyor belt via a guide 31. The bigger components 24 are collected at the end 23. These components are too large and have to be further reduced before they are put back in the installation 1.

It is clear that spiral blades can be provided in the drum screen, for example as represented by means of a dashed line in figure 5, to force the material in one direction.

As shown in figure 1, another supply device 33 can be provided next to the sifting device 4 to further process small fractions, in this case smaller than 12 mm, which do not need to be sieved. This supply device 33 preferably consists of a hopper which works in conjunction with the conveyor line 32.

The conveyor line 32 carries the materials 7, or at least the residual components 30 thereof, to the aerodynamic separation device 5.

Preferably, an aerodynamic separation device is used which makes use of an air separator 34, and better still a zigzag air separator. As is known, such an air separator 34 is an appliance in which the materials provided therein are put into contact with an air stream, such that certain components are blown out of it and are collected separately.

The aerodynamic separation device 5 is preferably mainly composed of a cycle consisting of a fan 35, the above-mentioned air separator 34 and a cyclone 36 or such respectively, which are connected to one another by means of the required air ducts 37, 38 and 39.

As shown in figure 6, the air separator 34 mainly consists of a zigzag duct 40 with an inlet 41 for the materials 7, or at least the components 30 thereof, outlets 42 and 43 through which the further separated materials are removed separately and an inlet 44 through which the air is supplied. Because of the zigzag construction of the duct 40, the falling material is ripped and swung to and fro, as a result of which the material is optimally prepared for the air separation.

The fan 35, which is driven by a driving element 45 such as an electrical engine, draws the air out of the air separator 34 at the top via the cyclone 36, and blows the drawn-in air back into the air separator 34 via the air duct 37.

The cyclone 36 makes sure that the extracted components 46 are separated from the air. These components 46 in the cyclone 36 are carried outside via a lock 47 and possibly carried off via a conveyor belt 48.

In order to prevent saturation in the cycle, part of the air volume can be blown off, via blow-off means 49, which for example consist of a filter 51 connected onto a pipe 50, which is branched off on the pipe 37. By making sure that the filter 51 has the right dimensions, the emission of noxious components and such remains in conformity with the legal standards. The part of the volume which is driven through the filter 51 amounts to about 10%, and can possibly be adjusted by providing a control valve 52 in the above-mentioned pipe 50. The part which is discharged from the cycle via the filter 51 can be freely sucked in again at the bottom of the air separator 34 by way of compensation.

The aerodynamic separation device 5 is preferably equipped with means which make it possible to adjust the air flow in order to thus obtain various separation effects. These means can be of various nature. In the first place, use can be made to this end of a fan 35, a driving element 45 with an adjustable rotational speed respectively. According to another possibility, means can be provided such as a control valve 53 to shut off the outlet of the fan 35 to a greater or lesser extent, as a result of which the fan 35 sucks in less air. According to yet another possibility, a connecting duct 34 is provided between the inlet 44 for the air or a branching point 55 and the outlet 43, in which a control valve 36 is provided, such that the zigzag duct 40 can be shorted to a greater or lesser extent.

The components 57 of the material 7 which are collected at the bottom of the air separator 34, are carried via a conveyor line 58 to the above-mentioned separation device 2.

As shown in figure 7, the separation device 2 according to the invention mainly consists of a receiver 59 which is meant to contain a medium 60; means 61 to move the medium 60; means 62 to put the materials 7, or at least the residual components 57, in the receiver 59 with the medium 60; means 63 to carry off the components 64 floating on the medium 60 from the receiver 59; and means 65 to carry off the sinking components 66 in the medium 60 separately from the floating components 66.

In order to obtain that the materials 7, or at least the residual components 57 thereof, are again separated very precisely on the basis of their densities, as well as to make very large throughput flows possible, up to 50 tons per hour, the above-mentioned constituent parts of the separation device 2 are preferably carried out as described below in detail.

The receiver 59 preferably consists of a horizontally or mainly horizontally erected drum, which in turn preferably consists of a cylindrical casing 67 and conical end parts 68 and 69, which are open at their free ends in order to provide for a passage 70 and a passage 71 respectively.

The means 61 to move the medium 60 can be of various nature. Preferably, they consist of a rotating support 72 for the receiver 59 and a drive 73 to make the receiver 59 turn around its axis on the one hand, and a cycle 74 to make at least part of the medium 60 circulate, in such a manner that it flows permanently through the receiver 59, preferably from the passage 70 to the passage 71.

The rotating support 72 consists for example of a number of wheels 76 fixed in supports 75 upon which the receiver 59 rests. The drive 73 may consist of an electrical engine, whose revolutionary speed is preferably adjustable.

The means 62 to supply the materials to be separated in the separation device 2 to the medium 60 consist of the above-mentioned passage 70 on the one hand, and of a slide 77 or such extending through said passage 70 on the other hand. The slide 77 may be covered with wearing plates. The angle and inlet height of the slide 77 are adjustable, such that the inlet can be adjusted as a function of the products to be processed.

The means 63 to carry off the components 64 floating on the medium 60 consist in the embodiment of figure 7 of features which make sure that the medium 60 overflows on one side of the receiver 59, in particular the passage 71. These features preferably consist in the combination of putting the receiver 59 and the supply of the medium 60 out of alignment via the above-mentioned slide 77. Said putting out of alignment indeed makes sure that the medium 60 always flows in the direction of the passage 71. The supply of the medium 60 via the slide 77, which happens with much kinetic energy, moreover causes a forced stream towards the drain.

The means 65 to carry off the sinking components 66 in the medium 60 consist of a mechanism which collects the components 66 at the bottom of the receiver 59 and carries them out of the receiver 59. As represented in figure 7, this mechanism preferably consists of a screw 78 which is provided against the inner wall of the conical end part 68 and which has such a taper that the components 66, as a result of the turning of the receiver 59, are forced outside at the bottom of the outlet 70.

In order to carry off the sinking components 66 even better, the cylindrical casing 67 preferably consists of two parts, a first part 79 which extends over practically the entire length of the cylindrical casing 67, and a second relatively short part 80 respectively which has a larger diameter and which is situated between the first part 79 and the conical end part 68. As a result, a sill 81 is formed which makes sure that the sinking components 66, once they sink down over said sill 81, are always caught by the screw 78 and are carried off.

The sill can also be made without the relatively short cylindrical part 80.

Preferably, the receiver 59 is also provided with a curtain or screen 82 in order to prevent that the material which has just been brought in the receiver 59 via the slide 77, which still floats a bit before there is a separation due to the difference in density, is also carried off via the passage 70, together with the sinking components 66, as a result of which faults might occur in the separation. Said screen 82 partially extends in and above the level 83 of the medium 60 and is preferably adjustable in height. Also, it is preferably applied at the height of the above-mentioned part 80. By placing this screen 82 relatively deep, a faultless separation is promoted. This effect is further enhanced because the above-mentioned sill 81 and the screen 82 are situated in each other's immediate vicinity.

As shown in figure 8, a part of the medium 60 can also be injected just past the screen 82 by means of nozzles 84. As a result, the floating components 64 which possibly come together at the height of the screen 82 are squirted away in the direction of the passage 71.

The medium 60 can be of various nature en density, depending on the application. Use is preferably made of a suspension of sand and/or sandy clay in water. Such a suspension is most suited for the concentration, in other words separation of materials having an average density between 1 and 1.7. For higher densities, up to 3.5, use can be made for example of a suspension of magnetite and/or ferrosilicon in water.

It is clear that the composition of the medium 60 can be easily changed in the case of a suspension and can be adjusted as a function of the aimed result, without any other basic materials being required for the medium 60, by permanently checking the relation between the amounts of solid material, for example sand, and liquid, for example water, and adjusting it if required.

Further, the separation device 2 is preferably also provided with means 85 and 86 to separate the components 64 and 66 from the medium 60.

The means 35 preferably consist of a sieve 87 and collecting means 88 placed underneath it, all this such that the components 64 fall onto the sieve 87 via the passage 71, and the medium 60 goes through the sieve 87 into the collecting means 88.

The sieve 87 preferably makes use of a vibrating sieve cover, which is driven by means of a driving element 89. The vibration makes sure that the medium 60 which adheres to the components 64 is shaken off, and it also makes sure that these components 64 leave the sieve 87 on one side, from where they are carried off by means of transport means 90 to a point of assembly 91.

A number of sprinklers 92 are preferably provided above the sieve 87 to spray off the medium adhering to the components 64 by means of water.

The collecting means 88 preferably consist of two recycling tanks 93 and 94 placed one after the other, of which the first is meant to collect the medium 60 which drips from the components 64, whereas the second is meant to collect the residual medium as well as water coming from the sprinklers 92. The part of the sieve cover on top of the recycling tank 93 preferably has larger meshes than the part on top of the recycling tank 94. The dimensions thereof are preferably between 0.5 and 0.25 mm respectively.

The floating components 66 undergo the same process, whereby the means 86 consist of a sieve 95 with a driving element 96 and collecting means 97. The collecting means 97 consist, analogous to the collecting means 88, of recycling tanks 98 and 99. Further, this part also contains sprinklers 100, transport means 101 and a point of assembly 102.

The recycling tanks 93 and 98 are connected to one another by means of a pipe 103. Analogously, the recycling tanks 94 and 97 are connected by means of a pipe 104. Thus, two recycling circuits are obtained.

The first circuit is part of the above-mentioned cycle 74. This cycle 74 is closed as the medium from the recycling tanks 93 and 98 is pumped back in the receiver 59 via the pipe 103, a pump 105 and a pipe 106, preferably via the slide 77.

The second circuit provides for the processing of the rinsing emulsion which is collected in the recycling tanks 94 and 99, which mainly consists of water from the sprinklers 92 and 100, and also a limited amount of solid material, for example sand. This second circuit makes sure that the rinsing emulsion is processed in a cyclone 107, where a separation takes place, such that a component is formed having practically the same composition as the medium 60 on the one hand, and a watery component on the other hand. The first-mentioned component is brought in the recycling tank 93 and/or 98 via a pipe 108, which is represented in figure 1. The second, watery component is guided via a pipe 109 to a decantation basin 110, where the very fine, solid components settle on the bottom.

The water which is recycled from the decantation basin 110 can be used again via a pipe 111 to supply the sprinklers 92 and 100 with water, whereas the sediment can be used to prepare medium, by pumping it in tanks 93 and 98 so as limit the consumption of medium.

As mentioned above, the separation device 2 can also be provided with control and adjusting means to keep the density of the medium 60 in the receiver 59 at the required level. Use can be made to this end of a metal cylinder which is constantly being weighed in the medium 60 and whose behaviour is converted by means of a computer to a value which reflects the density. Adjusting can then be done by draining off or adding water.

The combination of subsequently a magnetic separation device 3, a sifting device 4, an aerodynamic separation device 5 and the above-mentioned separation device 2, makes the installation 1 universally applicable. The fact that every operation hereby is a preparation to the next stage guarantees the universal character of the entire installation. Thus, for example, in many cases, the separation device 2 cannot process any material which was not extracted in the aerodynamic separation device 5, as the dust particles obstruct the sieves 87 and 95, or contaminate the medium 60 such that the required density cannot be maintained. This does not exclude, however, that certain operations can be omitted for certain applications, although this is at the expense of the above-mentioned universal character.

The operation of the installation 1 can be easily derived from the figures.

The materials 7 to be separated are supplied into the receiver 8 of the dose-measuring device 6 by means of a wheel loader. The dose-measuring device 6 makes sure that the material 7 is carried to the sifting device 4 at a constant rate.

Before the material 7 reaches the sifting device, it passes the magnetic separation device 3, where the ferromagnetic materials are attracted against the magnetic drum 15 and are deposited next to the conveyor line 14 of the magnetic drum 15.

The residual non-magnetic components which can be separated are guided into the drum screen 17. The smallest components fall through the sieve openings 27 of the sieve wall, whereas the bigger components fall through the sieve openings 28 of the sieve wall 26 onto the conveyor line 32. The biggest components, which are not suited for processing in the air separator 34, leave the drum screen 17 at the end 23, and can be put back in the installation after they have been reduced again by means of a device which is not represented, for example a hammer mill.

In the aerodynamic separation device 5, the residual components of the material 7 fall through the zigzag duct 40, where they are drawn apart so to say as they come into contact with the walls, which results in an optimum separation of the large and light components.

The components of the materials which are collected at the bottom of the air separator 43 are brought into the receiver 59 via the slide 77. The floating components 64 are carried off together with the medium 60 via the passage 71. The components 64 subsequently end up on the sieve 87, whereby the medium 60 is collected through the sieve 87 in the recycling tanks 93 and 94. The components 64 which are also sprayed off by means of the sprinklers 92 are finally carried off via the transport means 90.

The sinking components 66 are carried out of the receiver 59 by means of the screw 78 and are subsequently guided through a sieve 95, analogously to the above-mentioned components 64, to be finally carried to a point of assembly via transport means 101.

It is clear that the invention also concerns the method which is followed hereby and which is applied on the basis of the above-described operation.

The present invention is by no means limited to the embodiment described above and represented in the accompanying drawings; on the contrary, such a method and installation for separating materials can be made in various forms and dimensions while still remaining within the scope of the invention.

## Claims

1. Method for separating materials, especially waste materials, characterized in that it subsequently provides for a magnetic separation; a separation by means of a sifting device (4); an aerodynamic separation by means of an air separator (34); and a separation by means of a separation process which mainly consists in putting the materials yet to be separated in a medium (60), in moving the medium (60), and in separately removing the floating and sinking components (64, 66) of the above-mentioned material (7) from the medium (60).

2. Method according to claim 1, characterized in that a medium (60) is used which consists of a suspension of solid and liquid material.

3. Method according to claim 2, characterized in that the medium (60) consists of a suspension of sand and water.

4. Method according to claim 3, characterized in that the medium (60) consist of a suspension of ferrosilicon with water or magnetite with water or magnetite and ferrosilicon with water.

5. Method according to any of the above claims, characterized in that the average density of the medium (60) is permanently controlled and adjusted.

6. Installation for separating materials according to claim 1, characterized in that it consists of subsequently and in the order in which the materials (7) are processed, a magnetic separation device (3); a sifting device (4); an aerodynamic separation device (5); and a separation device (2) which is formed of a receiver (59), meant to contain a medium (60), means (61) to move the medium (60), means (62) to put the materials (7) yet to be separated with the medium (60) in the receiver (59), means (63) to carry off the components (64) floating on the medium (60) from the receiver (59), and means (65) to carry off the sinking components (66) in the medium (60) separately from the floating components (64).

7. Installation according to claim 6, characterized in that the receiver (59) mainly consists of a horizontally or almost horizontally erected drum.

8. Installation according to claim 7, characterized in that the drum mainly consists of a cylindrical casing (67) with conical end parts (68, 69), which each have a passage (70, 71) at their free ends.

9. Installation according to any of claims 6 to 8, characterized in that the means (61) to move the medium (60) at least consist of a cycle (74) which makes sure that at least part of the medium (60) circulates and flows permanently through the receiver (59).

10. Installation according to any of claims 6 to 9, characterized in that the receiver (59) is supported in a rotating manner and is equipped with a drive (73) to make the receiver (59) turn around its longitudinal axis.

11. Installation according to any of claims 6 to 10, characterized in that the means (62) to put the materials (7) in the receiver (59) consist of a slide (77) which extends into the receiver (59).

12. Installation according to any of claims 6 to 11, characterized in that the means (63) to carry off the components (64) floating on the medium (60) consist of features which make sure that the medium (60) overflows on one side of the receiver (59) and carries along the floating components (64).

13. Installation according to claim 12, characterized in that the above-mentioned features consist at least in putting the receiver (59) out of alignment in the direction according to which the medium (60) must overflow.

14. Installation according to claim 12 or 13, characterized in that the above-mentioned features consist at least in the supply of medium (60) with much kinetic energy in the direction of the passage (71) through which the medium (60) should run out of the receiver (59).

15. Installation according to any of claims 6 to 14, characterized in that the means (65) to carry off the sinking components (66) in the medium (60) consist of a screw (78) which is provided against the inner wall of the receiver (59), such that when the receiver (59) rotates, the sunken components (66) are carried outside.

16. Installation according to claim 15, characterized in that the receiver (59) has a cylindrical casing (67) and two conical end parts (68, 69), whereby the floating components (64) are carried off via one end part (69) and the sinking components (66) via the other end part (68); in that the cylindrical casing (67) consists of one or two parts (79, 80), at least a first part (79) which extends over practically the entire length of the cylindrical casing (67), and either or not a second relatively short part (80) respectively which has a larger diameter and which is situated between the first part (79) and the conical end part (68) via which the sinking components (66) are carried off; in that a sill (81) is situated between the first part (79) and the second part (80), between the conical end part (68) and the first part (79) respectively; and in that the screw (78) is applied on the end part (68) via which the sinking components (66) are carried off.

17. Installation according to any of claims 6 to 16, characterized in that a screen (82) is placed in the receiver (59) which prevents that floating components or components which have not been separated yet are carried off together with the sinking components (66).

18. Installation according to claim 17, characterized in that the screen (82) can be adjusted in height.

19. Installation according to any of claims 6 to 18, characterized in that the separation device (2) is provided with means (85; 86) to separate the floating and sinking components (64; 66) from the medium (60); and in that these means (85; 86) each mainly consist of a sieve (87; 95) through which said components (64; 66) are carried off, and of collecting means (88; 97) for the medium (60) placed under the sieves (87; 95).

20. Installation according to claim 19, characterized in that the sieves (87; 95) have a vibrating sieve cover.

21. Installation according to claim 19 or 20, characterized in that each of the collecting means (88; 97) consist of two recycling tanks (93, 94; 98, 99) placed one after the other, whereby the sieve cover on top of the first recycling tank (93; 98) has larger meshes than the sieve cover on top of the second recycling tank (94; 99); and in that sprinklers (92; 100) to spray off said components (64; 66) with water are provided above the sieve cover which is situated on top of the second recycling tank (94; 99).

22. Installation according to claim 21, characterized in that the recycling tanks (93, 94; 98, 99) are part of two recycling circuits, whereby the first recycling circuit makes sure that the content of the first recycling tanks (93; 98) is pumped back into the receiver (59) via a pump (105), and whereby the second recycling circuit makes sure that the content of the second recycling tanks (94; 99) is separated into a watery and less watery component, whereby the less watery component is put back in the receiver (59), either directly or indirectly, and whereby the watery component is processed in a decantation basin (110).

23. Installation according to any of claims 6 to 22, characterized in that the sifting device (4) consists of a rotating drum screen (17) with at least two subsequent sieve walls (25, 26) with sieve openings (27, 28) of different dimensions.

24. Installation according to claim 23, characterized in that the sieve drum (17) has open ends (22, 23) for supplying the material to be sifted and for carrying off the biggest residual components (24) which do not fall through the sieve walls (25, 26) respectively.

25. Installation according to claim 24, characterized in that the sieve drum (17) has two sieve walls (25, 26) for sifting the components (29, 30) with granular sizes in the order of 0-12 mm and 12-120 mm respectively, whereby the biggest of these components (30) are sent on for further processing.

26. Installation according to any of claims 6 to 25, characterized in that the aerodynamic separation device (5) mainly consists of a zigzag air separator (34) which is part of a cycle with a cyclone (36) and a fan (35).

27. Installation according to claim 26, characterized in that the above-mentioned cycle is provided with blow-off means (49), consisting of a filter (51) which is connected onto a pipe (50) which is branched off on the pipe (37) between the fan (35) and the air separator (34), whereby a control valve (52) is provided in the first-mentioned pipe (50).

28. Installation according to any of claims 6 to 27, characterized in that the aerodynamic separation device (5) is equipped with means to adjust the flow rate of the air which provides for the separation.

29. Installation according to any of claims 26, 27 or 28, characterized in that only the components (57) which are collected at the bottom of the aerodynamic separation device (5) are supplied to the above-mentioned separation device (2), more in particular in which a separation by means of a medium (60) is carried out.

30. Installation according to any of claims 6 to 29, characterized in that a dose-measuring device (6) is placed at the inlet of the installation (1) which mainly consists of a funnel-shaped receiver (8) which is provided with a discharge opening (9) of specific dimensions, a conveyor belt (10) placed under the receiver (8), such that the material is carried off as a result of the rotation of the conveyor belt (10) via the discharge opening (9); and a return element placed in the receiver (8) which guarantees the continuous discharge of material (7) through the discharge opening (9).
